(19) **Europäisches Patentamt / European Patent Office / Office européen des brevets**

(11) **EP 3 891 223 B1**

(12) **FASCICULE DE BREVET EUROPEEN**

(45) Date de publication et mention de la délivrance du brevet:
**26.10.2022 Bulletin 2022/43**

(21) Numéro de dépôt: **19812773.0**

(22) Date de dépôt: **02.12.2019**

(51) Classification Internationale des Brevets (IPC):
*C08L 95/00* (2006.01)    *C09K 3/10* (2006.01)
*E01C 23/06* (2006.01)    *E04B 1/68* (2006.01)

(52) Classification Coopérative des Brevets (CPC):
(C-Sets disponibles)
**C08L 95/00; E01C 7/187; E01C 7/22; E01C 7/265;**
E04B 1/6801; E04G 23/0203          (Cont.)

(86) Numéro de dépôt international:
**PCT/EP2019/083303**

(87) Numéro de publication internationale:
**WO 2020/114964 (11.06.2020 Gazette 2020/24)**

(54) **MASTIC BITUMINEUX, SON PROCEDE DE PREPARATION ET SES APPLICATIONS**

BITUMINÖSER MASTIX, VERFAHREN ZUR HERSTELLUNG DAVON UND VERWENDUNGEN DAVON

BITUMINOUS MASTIC, METHOD FOR PREPARING SAME AND USES THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2018 FR 1872400**

(43) Date de publication de la demande:
**13.10.2021 Bulletin 2021/41**

(73) Titulaire: **TotalEnergies OneTech
92400 Courbevoie (FR)**

(72) Inventeurs:
• **LAPALU, Laurence
69100 VILLEURBANNE (FR)**
• **ANACLET, Pauline
69600 OULLINS (FR)**

• **GAMET, Olivier
77700 BAILLY ROMAINVILLIERS (FR)**

(74) Mandataire: **Corizzi, Valérie
PACT-IP
37, rue Royale
92210 Saint-Cloud (FR)**

(56) Documents cités:
**EP-A1- 0 782 977    WO-A1-94/14896**

(52) Classification Coopérative des Brevets (CPC):
(Cont.)

C-Sets
**C08L 95/00, C08L 91/00, C08L 53/02, C08K 3/00**

**Description**

**Domaine technique**

La présente invention concerne un mastic bitumineux comprenant, d'une part, un mélange d'au moins un liant hydrocarboné à base de bitume et d'au moins une huile hydrocarbonée, et d'autre part, des fines. L'invention concerne également un procédé de préparation dudit mastic bitumineux et ses utilisations, notamment pour certaines applications routières et/ou industrielles.

**Etat de la technique antérieure**

Il est courant dans le domaine des constructions, notamment du bâtiment ou encore des applications routières, d'observer à la surface des matériaux la présence de discontinuités, notamment de fissures. Souvent déjà présentes dans la structure initiale, les dimensions de ces discontinuités évoluent au cours du temps. L'expansion de ces discontinuités conduit à des problèmes d'intégrité de la structure mais aussi, lorsqu'elles sont présentes au niveau de la surface extérieure du matériau, à l'introduction d'eau dans le matériau. La plupart des matériaux classiquement utilisés dans le domaine des constructions sont touchés par ces phénomènes comme par exemple le bois, la brique, le béton, le métal mais aussi l'asphalte pour l'aménagement de la chaussée.

Les phénomènes influençant l'évolution de ces discontinuités sont nombreux. On peut citer à titre d'exemple les conditions climatiques qui influent notamment sur la température et le taux d'humidité des matériaux. L'évolution de ces paramètres se traduit, pour le matériau, par l'apparition de phases successives de contraction et de dilatation qui favorisent la propagation, notamment l'élargissement et/ou l'allongement, de ces discontinuités. Une variation brutale de ces conditions, notamment sous la forme d'un choc thermique, peut ainsi conduire à une évolution rapide et soudaine de la taille des discontinuités.

En ce qui concerne les applications routières il faut également mentionner les contraintes liées au trafic des véhicules sur la chaussée comme la déformation permanente (orniérage et/ou indentation) et/ou le retrait des couches sous-jacentes qui accélèrent la dégradation de la chaussée et la propagation de ces discontinuités.

Par ailleurs, chaque matériau présente un taux de dilatation/contraction qui lui est propre et qui évolue au cours du temps indépendamment de celui des autres. De plus, les différentes déformations subies par le matériau peuvent se compenser ou au contraire se cumuler. Le comportement global des structures est par conséquent très difficile à prévoir.

Il est essentiel de limiter la propagation de ces discontinuités, notamment de ces fissures, afin de préserver l'intégrité de la structure mais aussi afin de protéger cette structure de l'introduction éventuelle d'eau.

Afin de prévenir l'évolution de ces discontinuités, il est courant dans le domaine des bâtiments et des applications routières de réparer, colmater ou encore de combler ces discontinuités avec un mastic bitumineux qui est capable d'absorber les contraintes susceptibles d'apparaitre dans l'un des éléments de la structure sans les transmettre au reste de la structure.

Il est également courant d'utiliser ces mêmes mastics bitumineux pour le pontage de joints entre des éléments distincts d'une structure. On peut par exemple utiliser ces mastics bitumineux pour former un joint entre deux dalles de béton de ciment coulées, notamment au cours de la construction d'une route.

Dans les deux cas, les problématiques sont les mêmes. Il s'agit de fournir un matériau résistant à la fissuration et capable de combler l'espace laissé libre entre les deux éléments tout en permettant de solidariser ces deux éléments à plus ou moins long terme.

WO 94/14896 A1 enseigne la préparation de compositions bitume/polymère à partir de particules de gommes réticulées, notamment issues du recyclage de pneus automobiles.

EP 0 782 977 A1 divulgue des compositions utilisables comme revêtement d'étanchéité. Ces compositions sont constituées d'une part d'un latex aqueux et d'autre part d'une huile porteuse dans laquelle sont dispersés un agent vulcanisant et un agent hygroscopique.

FR 2 897 359 A1 divulgue un mastic bitumineux comprenant d'une part un liant hydrocarboné à base de bitume, et d'autre part des fines dont une partie d'ultrafines. Ce document ne concerne cependant pas le traitement de fissures mais la fourniture d'une composition-mère utilisable pour la préparation de matériaux bitumineux comme des asphaltes coulés ou encore des enrobés bitumineux. Ce document n'enseigne pas non plus la préparation de mastic bitumineux à partir d'une huile hydrocarbonée d'origine pétrolière.

FR 2 968 655 A1 divulgue un mastic clair et colorable à base d'une huile synthétique ou naturelle, d'une résine et d'un élastomère. Ce document n'enseigne pas la préparation d'un mastic à partir d'un matériau bitumineux.

FR 3 034 773 A1 divulgue une composition de liant clair à base d'une huile synthétique à haute teneur en composés paraffiniques et d'un copolymère à base de motifs diène conjugué et de motifs hydrocarbure monovinyl aromatique. Ce document ne divulgue cependant pas la préparation d'un mastic bitumineux et ne concerne pas le traitement des fissures.

Il subsiste cependant le besoin de fournir des compositions de mastic bitumineux présentant :

- un indice de plasticité plus adapté, c'est à dire d'une part un point de fragilité (Fraass) faible, et d'autre part une pénétrabilité à 25°C et un point de ramollissement (Température Bille et Anneau) élevés,
- une faible viscosité,
- une bonne résistance au fluage
- une bonne résistance à l'orniérage, et
- une bonne résistance à la fissuration.

Le Demandeur a établi, de façon surprenante, que le choix judicieux d'une huile synthétique à haute teneur en composés paraffiniques permettait d'obtenir un mastic bitumineux aux propriétés mécaniques améliorées.

**Résumé de l'invention**

L'invention concerne un mastic bitumineux comprenant :

- de 0,5% à 25% en masse d'au moins une huile hydrocarbonée dont la teneur totale en composés paraffiniques, mesurée selon la méthode ASTM D2140, est supérieure ou égale à 50% en masse, de préférence supérieure ou égale à 60% en masse, par rapport à la masse totale de l'huile,
- de 15% à 60% en masse de bitume,
- de 20% à 60% en masse de charges, et
- au plus 14% en masse d'au moins un polymère, de préférence choisi parmi les élastomères,

par rapport à la masse totale de mastic bitumineux.

L'invention concerne également un procédé de préparation d'un mastic bitumineux tel que défini ci-dessus et de façon détaillée ci-dessous comprenant au moins les étapes suivantes :

(1) le chauffage du bitume à une température allant de 100°C à 220°C, de préférence de 130°C à 190°C, encore plus avantageusement de 140°C à 180°C,
(2) l'introduction, sous agitation, de l'huile hydrocarbonée,
(3) l'ajout éventuel du polymère,
(4) l'introduction des charges, et
(5) le malaxage du mélange.

Selon un mode de réalisation préféré, l'huile hydrocarbonée est choisie parmi les huiles synthétiques issues des coupes d'unité de désasphaltage (DAO) et leurs mélanges.

Selon un mode de réalisation préféré, l'huile hydrocarbonée a une teneur en composés naphténiques, mesurée selon la norme ASTM D2140, inférieure ou égale à 25% en masse, de préférence allant de 5% à 25% en masse, plus préférentiellement allant de 10 à 25% en masse, par rapport à la masse totale d'huile hydrocarbonée.

Selon un mode de réalisation préféré, l'huile hydrocarbonée a une teneur en composés paraffiniques, mesurée selon la norme ASTM D2140, supérieure ou égale à 50% en masse, de préférence supérieure ou égale 60% en masse, par rapport à la masse d'huile hydrocarbonée.

Selon un mode de réalisation préféré, l'huile hydrocarbonée présente un point d'aniline, déterminé selon la norme ISO 2977 :1997, supérieur ou égal à 80°C, de préférence supérieur ou égal à 90°C, plus préférentiellement supérieur ou égal à 100°C.

Selon un mode de réalisation préféré, le polymère est choisi parmi les copolymères à bloc, de préférence à base de motifs diène conjugué et de motifs hydrocarbure monovinyl aromatique, avantageusement à base de motifs butadiène et de motifs styrène.

Selon un mode de réalisation préféré, le polymère est choisi parmi les copolymères à blocs de styrène et de butadiène présentant une teneur pondérale en groupements 1,2-vinyle allant de 10% à 70%, de préférence de 10% à 50%, plus préférentiellement de 15% à 40 %, et avantageusement de 10% à 40%, encore plus préférentiellement de 20 à 40% en masse, par rapport à la masse totale du copolymère.

Selon un mode de réalisation préféré, le copolymère à blocs à base de styrène et de butadiène a une masse moléculaire moyenne en masse allant de 10 000 à 500 000 g.mol$^{-1}$, de préférence allant de 50 000 à 200 000 g.mol$^{-1}$, plus préférentiellement allant de 50 000 à 150 000 g.mol$^{-1}$.

L'invention concerne encore l'utilisation d'un mastic bitumineux tel que défini ci-dessus et de façon détaillée ci-dessous pour colmater et/ou réparer des fissures présentes à la surface d'un matériau de construction.

Selon un mode de réalisation préféré de l'utilisation, les fissures sont présentes à la surface d'une structure, d'un bâtiment ou d'une chaussée, de préférence une chaussée.

L'invention concerne aussi l'utilisation d'un mastic bitumineux tel que défini ci-dessus et de façon détaillée ci-dessous comme joint entre deux éléments de structure d'une construction.

L'invention concerne aussi l'utilisation d'un mastic bitumineux tel que défini ci-dessus et de façon détaillée ci-dessous pour limiter et/ou prévenir et/ou pour retarder la propagation, notamment l'allongement et/ou l'élargissement, de discontinuités, notamment de fissures, présentes à la surface d'une structure, d'un bâtiment ou d'une chaussée.

L'invention concerne aussi l'utilisation d'un mastic bitumineux tel que défini ci-dessus et de façon détaillée ci-dessous pour limiter et/ou prévenir et/ou pour retarder la pénétration et/ou l'introduction d'eau à l'intérieur d'une structure, d'un bâtiment ou d'une chaussée.

L'invention concerne encore un procédé pour colmater et/ou boucher et/ou réparer une fissure présente à la surface d'une structure, d'un bâtiment ou d'une chaussée, ce procédé comprenant :

(1) la fourniture d'un mastic bitumineux tel que défini ci-dessus et de façon détaillée ci-dessous, ledit mastic bitumineux étant conditionné à une température allant de 100°C à 200°C, de préférence allant de 120°C à 180°C, plus préférentiellement allant de 130°C à 160°C,
(2) l'introduction dudit mastic bitumineux chauffé à l'intérieur de la fissure, et
(3) le refroidissement du mastic bitumineux.

L'invention concerne encore un procédé pour maintenir et/ou renforcer l'étanchéité d'une structure, ce procédé comprenant :

(1) la fourniture d'un mastic bitumineux tel que défini ci-dessus et de façon détaillée ci-dessous, ledit mastic bitumineux étant conditionné à une température allant de 100°C à 200°C, de préférence allant de 120°C à 180°C, plus préférentiellement allant de 130°C à 160°C,
(2) l'étalement dudit mastic bitumineux sur tout ou partie de la surface de la structure, et
(3) le refroidissement du mastic bitumineux.

## Description détaillée

L'expression « consiste essentiellement en » suivie d'une ou plusieurs caractéristiques, signifie que peuvent être inclus dans le procédé ou le matériau de l'invention, outre les composants ou étapes explicitement énumérés, des composants ou des étapes qui ne modifient pas significativement les propriétés et caractéristiques de l'invention.

L'expression « compris entre X et Y » inclut les bornes, sauf mention contraire explicite. Cette expression signifie donc que l'intervalle visé comprend les valeurs X, Y et toutes les valeurs allant de X à Y.

L'invention concerne tout d'abord un mastic bitumineux comprenant au moins :

- une huile hydrocarbonée comprenant une teneur totale en composés paraffiniques, mesurée selon la méthode ASTM D2140, d'au moins 50% en masse, de préférence d'au moins 60% en masse, plus préférentiellement allant de 50% à 90% en masse, et avantageusement allant de 60% à 80% en masse, par rapport à la masse d'huile hydrocarbonée,
- du bitume,
- des charges, et
- éventuellement, un polymère, de préférence choisi parmi les élastomères.

Les mastics bitumineux sont des matériaux destinés à réparer et/ou colmater et/ou combler des discontinuités présentes à la surface d'un autre matériau, généralement dans le domaine de la voirie ou de la construction et à absorber les contraintes susceptibles d'apparaître à l'intérieur dudit matériau. Les mastics se caractérisent par une teneur élevée en charges, typiquement supérieure ou égale à 20% en masse par rapport à la masse totale de la composition.

Avantageusement, le mastic bitumineux selon l'invention est essentiellement constitué :

- d'une ou de plusieurs huiles hydrocarbonées comprenant une teneur totale en composés paraffiniques, mesurée selon la méthode ASTM D2140, d'au moins 50% en masse, de préférence d'au moins 60% en masse, plus préférentiellement allant de 50% à 90% en masse, et avantageusement allant de 60% à 80% en masse, par rapport à la masse d'huile hydrocarbonée,
- de bitume,
- de charges,
- éventuellement, d'un ou de plusieurs polymères, de préférence choisis parmi les élastomères,

- éventuellement, d'un ou de plusieurs composés réticulant
- éventuellement, d'un ou de plusieurs agents capables de piéger le sulfure d'hydrogène, et
- éventuellement, de dopes d'adhésivité.

## L'huile hydrocarbonée

Le mastic bitumineux selon l'invention comprend au moins une huile hydrocarbonée.

L'huile hydrocarbonée présente dans le mastic bitumineux selon l'invention joue le rôle d'« agent fluxant ». La présence de l'huile hydrocarbonée permet plus particulièrement de fluidifier et de réduire la viscosité et le module du mastic obtenu.

Dans un mode préféré de réalisation de l'invention, l'huile hydrocarbonée est choisie parmi les huiles synthétiques issues des coupes de désasphaltage de distillation sous pression réduite (résidu sous vide, RSV) de pétrole brut (ci-après dénommée « huile DAO »).

En particulier, dans un mode de réalisation préféré, l'huile hydrocarbonée présente dans le mastic bitumineux selon l'invention est essentiellement constituée d'une huile DAO.

Les teneurs en composés paraffiniques, naphténiques et aromatiques mentionnées dans la présente demande sont déterminées selon la norme ASTM D2140, en pourcentages massiques par rapport au poids de l'huile.

Dans un mode de réalisation spécifique, l'huile hydrocarbonée présente dans le mastic bitumineux selon l'invention, de préférence choisie parmi les huiles DAO, présente une teneur totale en composés paraffiniques supérieure ou égale à 50% en masse, de préférence supérieure ou égale 60% en masse, allant de préférence de 50% à 90% en masse, plus préférentiellement de 50% à 80% en masse et en particulier de 55% à 75% en masse ou en particulier de 60% à 75% en masse, avantageusement de 60 à 70% en masse, par rapport à la masse totale d'huile hydrocarbonée.

Dans un mode de réalisation plus spécifique de réalisation de l'invention, l'huile hydrocarbonée, de préférence choisie parmi les huiles DAO, présente une teneur totale en composés naphténiques qui est inférieure ou égale à 25% en masse, par exemple allant de 5% à 25% en masse, et en particulier allant de 10% à 25% en masse, par rapport à la masse totale d'huile hydrocarbonée.

Dans un mode de réalisation plus spécifique de réalisation de l'invention, l'huile hydrocarbonée, de préférence choisie parmi les huiles DAO, a en outre une teneur totale en composés aromatiques inférieure ou égale à 25% en masse, par exemple allant de 5% à 25% en masse, et en particulier allant de 8% à 18% en masse, par rapport à la masse totale d'huile hydrocarbonée.

Dans un mode préféré de réalisation de l'invention, l'huile hydrocarbonée, de préférence choisie parmi les huiles DAO, présente :

(i) une teneur totale en composés paraffiniques allant de 50% à 90% en masse ;
(ii) une teneur totale en composés naphténiques allant de 5% à 25% en masse, de préférence allant de 15% à 25% en masse ; et
(iii) une teneur totale en composés aromatiques allant de 5% à 25% en masse, de préférence allant de 10% à 15% en masse,

par rapport à la masse totale d'huile hydrocarbonée.

Dans un mode encore préféré de réalisation de l'invention, l'huile hydrocarbonée, de préférence choisie parmi les huiles DAO, présente :

(i) une teneur totale en composés paraffiniques allant de 60% à 75% en masse ;
(ii) une teneur totale en composés naphténiques allant de 5% à 25% en masse, de préférence allant de 15% à 25% en masse ; et
(iii) une teneur totale en composés aromatiques allant de 5% à 25% en masse, de préférence allant de 10% à 15%,

par rapport à la masse totale d'huile hydrocarbonée.

Selon un mode de réalisation, l'huile hydrocarbonée, présente dans le mastic bitumineux selon l'invention, présente un point d'aniline, déterminé selon la norme ISO 2977 :1997, supérieur ou égal à 80°C, de préférence supérieur ou égal à 90°C, plus préférentiellement supérieur ou égal à 100°C.

Des huiles répondant aux caractéristiques ci-dessus et utilisables pour la préparation d'un mastic bitumineux selon l'invention peuvent notamment être obtenues par les procédés de désasphaltage des résidus sous vide (RSV) issus du raffinage du pétrole, par exemple par un désasphaltage à l'aide d'un solvant en $C_3$ à $C_6$, de préférence par un désasphaltage au propane. Ces procédés de désasphaltage sont bien connus de l'homme du métier et sont décrits par exemple dans Lee et al 2014, Fuel Processing Technology 119 : 204-210. Les résidus issus de la distillation sous vide (RSV) sont séparés selon leur poids moléculaire en présence de solvant en $C_3$ à $C_6$ (par exemple le propane). L'huile dite DAO (« deasphalted oil ») ainsi obtenue est riche en paraffine, présente une très faible teneur en asphaltènes, a une température d'évaporation comprise entre 440°C et 750°C, et une gravité API bien supérieure à celle des résidus sous vide.

La gravité API ou densité API d'une huile (en anglais « API gravity » pour « American Petroleum Institute gravity ») peut être obtenue à partir de l'équation (1) suivante :

$$G_{API} = \frac{141,5}{d} - 131,5 \quad (1)$$

avec :

- $G_{API}$, la gravité API de l'huile considérée (exprimée sans unité), et
- d, la densité à 16°C (60°F) de l'huile considérée (exprimée sans unité) en prenant l'eau comme référence.

Les teneurs respectives en composés paraffiniques, naphténiques et aromatiques dépendent dans une certaine mesure de la nature du pétrole brut à l'origine de l'huile DAO et du processus de raffinage utilisé. L'homme du métier sait déterminer les teneurs respectives en composés paraffiniques, naphténiques et aromatiques d'une huile DAO par exemple à l'aide de la méthode de fractionnement SARA également décrite dans Lee et al 2014, Fuel Processing Technology 119 : 204-210 et ainsi sélectionner l'huile DAO appropriée pour la préparation de la composition de mastic bitumineux selon l'invention.

Dans un mode de réalisation spécifique, la quantité d'huile hydrocarbonée présente dans le mastic bitumineux selon l'invention va de 0,5% à 25% en masse, de préférence de 1 à 25% en masse, plus préférentiellement de 1% à 12% en masse, par rapport à la masse totale de mastic bitumineux.

*Le bitume*

Par « bitume », on entend au sens de l'invention toutes compositions bitumineuses constituées d'une ou de plusieurs bases bitumes et comprenant éventuellement un ou plusieurs additifs chimiques.

Parmi les bases bitumes utilisables dans les mastics bitumineux selon l'invention, on peut citer tout d'abord les bitumes d'origine naturelle, ceux contenus dans des gisements de bitume naturel, d'asphalte naturel ou les sables bitumineux et les bitumes provenant du raffinage du pétrole brut. Les bases bitumes sont avantageusement choisies parmi les bases bitumes provenant du raffinage du pétrole brut. Les bases bitumes peuvent être choisies parmi les bases bitumes ou les mélanges de bases bitumes provenant du raffinage du pétrole brut, en particulier des bases bitumes contenant des asphaltènes ou des brais. Les bases bitumes peuvent être obtenues par des procédés conventionnels de fabrication des bases bitumes en raffinerie, en particulier par distillation directe et/ou distillation sous vide du pétrole. Ces bases bitumes peuvent être éventuellement viscoréduites et/ou désasphaltées et/ou rectifiées à l'air. Il est courant de procéder à la distillation sous vide des résidus atmosphériques provenant de la distillation atmosphérique de pétrole brut. Ce procédé de fabrication correspond, par conséquent, à la succession d'une distillation atmosphérique et d'une distillation sous vide, la charge alimentant la distillation sous vide correspondant aux résidus atmosphériques. Ces résidus sous vide issus de la tour de distillation sous vide peuvent être également utilisés comme bitumes. Il est également courant d'injecter de l'air dans une charge composée habituellement de distillats et de produits lourds provenant de la distillation sous vide de résidus atmosphériques provenant de la distillation du pétrole. Ce procédé permet d'obtenir une base soufflée, ou semi-soufflée ou oxydée ou rectifiée à l'air ou rectifiée partiellement à l'air.

Les différentes bases bitumes obtenues par les procédés de raffinage peuvent être combinées entre elles pour obtenir le meilleur compromis technique. La base bitume peut aussi être une base bitume de recyclage. Les bases bitumes peuvent être des bases bitumes de grade dur ou de grade mou.

Pour les procédés conventionnels de fabrication des bases bitumes, on opère généralement à des températures de fabrication comprises entre 100°C et 200°C, de préférence entre 140°C et 200°C, plus préférentiellement entre 140°C et 170°C, et sous agitation pendant une durée d'au moins 10 minutes, de préférence comprise entre 30 minutes et 10 heures, plus préférentiellement entre 1 heure et 6 heures. On entend par température de fabrication, la température de chauffage de la ou des bases bitumes avant mélange ainsi que la température de mélange. La température et la durée du chauffage varient selon la quantité de bitume utilisée et sont définies par la norme NF EN 12594.

Les bitumes soufflés peuvent être fabriqués dans une unité de soufflage, en faisant passer un flux d'air et/ou d'oxygène à travers une base bitumineuse de départ. Cette opération peut être menée en présence d'un catalyseur d'oxydation, par exemple de l'acide phosphorique. Généralement, le soufflage est réalisé à des températures élevées, de l'ordre de 200 à 300°C, pendant des durées relativement longues typiquement comprises entre 30 minutes et 2 heures, en continu ou par lots. La durée et la température de soufflage sont ajustées en fonction des propriétés visées pour le bitume soufflé et en fonction de la qualité du bitume de départ.

Préférentiellement, la base bitume présente une pénétrabilité à l'aiguille, mesurée à 25°C selon la norme EN 1426, allant de 5 à 330 1/10 mm, de préférence de 20 à 220 1/10 mm.

De manière bien connue, la mesure dite de « pénétrabilité à l'aiguille » est réalisée au moyen d'un test normalisé NF EN 1426 à 25°C ($P_{25}$). Cette caractéristique de pénétrabilité est exprimée en dixièmes de millimètre (dmm ou 1/10 mm). La pénétrabilité à l'aiguille, mesurée à 25°C, selon le test normalisé NF EN 1426, représente la mesure de la pénétration dans un échantillon de bitume, au bout d'un temps de 5 secondes, d'une aiguille dont le poids avec son support est de 100 g. La norme NF EN 1426 remplace la norme homologuée NF T 66-004 de décembre 1986 avec effet au 20 décembre 1999 (décision du Directeur Général d'AFNOR en date du 20 novembre 1999).

La quantité de base bitume présente dans le mastic bitumineux selon l'invention va, de préférence, de 15% à 60% en masse, plus préférentiellement de 20% à 45% en masse, encore plus préférentiellement de 25% à 40% en masse, par rapport à la masse totale de mastic bitumineux.

### Les charges

Les charges présentes dans le mastic bitumineux selon l'invention sont majoritairement constituées de fines. Selon un mode de réalisation particulier, les charges comprennent en outre des sables.

Par « charges », on entend au sens de l'invention des particules de matériaux inertes par rapport à chacun des constituants du mastic bitumineux selon l'invention, notamment par rapport à l'huile hydrocarbonée, au bitume ou encore au polymère optionnellement présent.

Ces particules de matériaux inertes sont utilisées dans le mastic bitumineux selon l'invention comme matériau de remplissage.

Les charges présentes dans le mastic bitumineux selon l'invention ont, de préférence, un diamètre inférieur ou égal 125 $\mu$m, de préférence inférieur ou égal à 100 $\mu$m, encore plus préférentiellement inférieur ou égal à 75 $\mu$m, avantageusement inférieur ou égal à 65 $\mu$m. Ce type de charges est habituellement appelé « fines ».

Les charges présentes dans le mastic bitumineux selon l'invention sont, de préférence, choisies parmi les charges organiques, les charges minérales et leurs mélanges, de préférence choisies parmi les charges minérales.

Comme charges minérales pouvant être utilisées pour la préparation d'un mastic bitumineux selon l'invention, on peut notamment citer : les fumées de silice ; les silices colloïdales, en particulier les silices de combustion et les silices de précipitation ; les argiles, notamment les phyllosilicates tels que les bentonites ; l'atapulgite ; les chlorites ; les kaolins ; le talc ; la craie ; les oxydes métalliques comme l'alumine, le rutile, l'anatase ou encore les oxydes de zinc ; les hydroxydes métalliques tels que l'hydroxyde d'aluminium ou de fer ; les nitrures métalliques tels que le nitrure de bore et les mélanges de ces matériaux.

Ces charges minérales peuvent éventuellement avoir été traitées, notamment de manière à rendre au moins une partie de leur surface hydrophobe.

La quantité de charges présentes dans le mastic bitumineux selon l'invention va, de préférence, de 20% à 60% en masse, plus préférentiellement de 30% à 50% en masse, plus préférentiellement de 40% à 50% en masse, par rapport à la masse totale du mastic bitumineux.

Selon un mode de réalisation particulier, lorsque l'on utilise du sable comme charge dans la composition selon l'invention, on choisit avantageusement des sables de diamètre inférieur à 2 mm, de préférence de diamètre allant de 50 $\mu$m à 2 mm.

Lorsque le mastic bitumineux selon l'invention est destiné à colmater et/ou à réparer des fissures, on choisira, de préférence, des sables dont le diamètre est inférieur ou égal à 0,5 mm.

Une fine granulométrie des charges, et notamment du sable, permet au mastic bitumineux de pénétrer, remplir, combler le cœur des fissures dont la largeur est très faible.

Dans le cas d'une utilisation du mastic comme joint ou encore comme revêtement d'étanchéité, les sables peuvent présenter une granulométrie plus élevée.

La sélection de la granulométrie optimale est adaptée par l'homme du métier en fonction de l'application.

De préférence, les sables sont choisis parmi les sables semi concassés ou roulés.

De préférence, les fines représentent au moins 60% en masse des charges présentes dans le mastic bitumineux selon l'invention, plus préférentiellement au moins 80% en masse, encore plus préférentiellement au moins 90% en masse, et avantageusement au moins 95% en masse, par rapport à la masse totale des charges présentes dans le mastic bitumineux.

Avantageusement, les charges sont essentiellement constituées de fines.

### Le polymère

Selon un mode de réalisation, le mastic bitumineux selon l'invention comprend en outre au moins un polymère, de préférence choisi parmi les élastomères.

Le polymère est, de préférence, choisi parmi les copolymères à blocs, plus préférentiellement choisi parmi les copolymères à blocs à base de motifs diène conjugués et de motifs hydrocarbure monovinyl aromatiques.

Le diène conjugué est choisi, de préférence, parmi ceux comportant de 4 à 8 atomes de carbone par monomère, par exemple parmi le butadiène, le 2-méthyl-l,3-butadiène (isoprène), le 2,3-diméthyl-l,3-butadiène, le 1,3-pentadiène et le 1,2-hexadiène, le chloroprène, le butadiène carboxylé, l'isoprène carboxylé, en particulier parmi le butadiène, l'isoprène, et leurs mélanges.

L'hydrocarbure monovinyl aromatique est choisi, de préférence, parmi le styrène, l'o-méthyl styrène, le p-méthyl styrène, le p-tert-butylstyrène, le 2,3 diméthylstyrène, le vinyl naphtalène, le vinyl toluène, le vinyl xylène, et analogues ou leurs mélanges, en particulier le styrène.

Plus préférentiellement, le polymère consiste en un ou plusieurs copolymères à blocs choisis parmi les copolymères de styrène et de butadiène, de styrène et d'isoprène, de styrène et de chloroprène, de styrène et de butadiène carboxylé ou encore de styrène et d'isoprène carboxylé. Un copolymère à blocs préféré est un copolymère à base de motifs butadiène et de motifs styrène tel que le copolymère à blocs styrène/butadiène SB ou le copolymère à blocs styrène/butadiène/styrène SBS.

Le copolymère à blocs de styrène et de diène conjugué, en particulier le copolymère à blocs de styrène et de butadiène, possède avantageusement une teneur pondérale en styrène allant de 5 à 50%, de préférence de 20 à 50%, par rapport à la masse totale du copolymère.

Le copolymère à blocs de styrène et de diène conjugué, en particulier le copolymère à blocs de styrène et de butadiène, possède avantageusement une teneur pondérale en butadiène (1-2 et 1-4) allant de 50 à 95%, par rapport à la masse totale du copolymère.

Le copolymère à blocs de styrène et de diène conjugué, en particulier le copolymère de styrène et de butadiène, possède avantageusement une teneur pondérale en groupement 1-2 vinyle allant de 10 à 70%, de préférence de 10 à 50%, plus préférentiellement de 10 à 40%, encore plus préférentiellement de 15 à 40%, avantageusement de 20 à 40%, par rapport à la masse totale du copolymère. Les motifs 1-2 vinyle sont les motifs qui résultent de la polymérisation via l'addition 1-2 des motifs butadiène.

La masse moléculaire moyenne en masse du copolymère à blocs de styrène et de diène conjugué, et notamment celle du copolymère de styrène et de butadiène, peut être comprise, par exemple, entre 10 000 et 500 000, de préférence entre 50 000 et 200 000 et plus préférentiellement de 50 000 à 150 000 daltons.

Dans un mode de réalisation spécifique, la quantité totale de polymère dans le mastic bitumineux selon l'invention est inférieure ou égale à 14% en masse, de préférence va de 1 à 12% en masse, plus préférentiellement de 2 à 9% en masse, avantageusement de 3% à 7% en masse, avantageusement de 4% à 6% en masse par rapport à la masse totale du mastic bitumineux.

Lorsque le mastic bitumineux selon l'invention comprend au moins un polymère, il peut, de manière optionnelle, comprendre également au moins un composé réticulant susceptible de réagir avec ledit polymère.

De préférence, selon cette variante optionnelle, le polymère est choisi parmi les élastomères et/ou les plastomères pouvant être fonctionnalisés et/ou pouvant comporter des sites réactifs.

De préférence, le composé réticulant est choisi parmi les agents de vulcanisation et les agents de réticulation.

Parmi les agents de vulcanisation, on peut citer les agents de vulcanisation à base de soufre et ses dérivés. Les agents de vulcanisation sont généralement introduits dans le mastic bitumineux selon l'invention selon une teneur allant de 0,01% à 30% en masse par rapport à la masse d'élastomère.

Parmi les agents de réticulation, on peut citer les agents de réticulation cationiques tels que les mono ou polyacides ; les anhydrides carboxyliques ; les esters d'acides carboxyliques ; les acides sulfoniques, sulfuriques ou phosphoriques ; les chlorures d'acides ; les phénols et leurs mélanges. Les agents de réticulation sont susceptibles de réagir avec l'élastomère et/ou le plastomère fonctionnalisé. Ils peuvent être utilisés en complément ou en remplacement des agents de vulcanisation définis ci-dessus. Les agents de réticulation sont généralement introduits dans le mastic bitumineux selon l'invention selon une teneur allant de 0,01% à 30% en masse par rapport à la masse de polymère.

Par ailleurs, lorsque le mastic bitumineux selon l'invention comprend au moins un agent de vulcanisation à base de soufre, il peut en outre comprendre au moins un agent susceptible de piéger le sulfure d'hydrogène.

*Les agents capables de piéger le sulfure d'hydrogène ($H_2S$)*

Selon un mode de réalisation, la composition de mastic selon l'invention comprend en outre au moins un agent capable de piéger le sulfure d'hydrogène, de tels composés étant également appelés « $H_2S$ scavengers » en anglais.

Comme agents capables de piéger le sulfure d'hydrogène, on peut citer à titre d'exemple les sels métalliques, organiques ou inorganiques, notamment choisis parmi les sels de zinc, de cadmium, de mercure, de cuivre, d'argent, de nickel, de platine, de fer, de magnésium ou de leurs mélanges. De préférence, les sels métalliques, organiques ou inorganiques sont choisis parmi les sels de zinc, et/ou de cuivre.

Des exemples d'agents capable de piéger le sulfure d'hydrogène sont notamment décrits dans WO 2005/065177 et WO 2015/071154.

De préférence, selon ce mode de réalisation, le mastic bitumineux selon l'invention comprend de 0,01% à 5% en masse d'un ou de plusieurs agents capables de piéger le sulfure d'hydrogène, plus préférentiellement de 0,05% à 3% en masse, encore plus préférentiellement de 0,1% à 1% en masse, les pourcentages étant exprimés par rapport à la masse totale du mastic bitumineux.

### Les dopes d'adhésivité

Pour améliorer l'affinité réciproque entre le liant constitué du bitume et de l'huile hydrocarbonée et les charges et afin d'en assurer la pérennité, des dopes d'adhésivité peuvent également être ajoutés au mastic selon l'invention. Il s'agit par exemple de composés tensioactifs azotés dérivés des acides gras (amines, polyamines, alkyl-polyamine etc ...).

Lorsqu'ils sont ajoutés au mastic bitumineux, les dopes d'adhésivité représentent, de préférence, de 0,05% à 1% en poids par rapport au poids du mastic bitumineux. Par exemple, dans un mode de réalisation spécifique, on ajoutera de 0,05% à 0,5% en masse de dopes d'adhésivité, de préférence de 0,1% à 0,3% en masse de dopes d'adhésivité.

### Le mastic bitumineux

De préférence, le mastic bitumineux selon l'invention comprend, de préférence est essentiellement constitué :

- de 0,5% à 25% en masse d'une ou de plusieurs huiles hydrocarbonées,
- de 15% à 60% en masse de bitume,
- de 20% à 60% en masse de charges,
- d'au plus 14% en masse d'un ou de plusieurs polymères,
- optionnellement, de 0,01 à 30% en masse d'un ou de plusieurs composés réticulant,
- optionnellement, de 0,01% à 5% en masse d'un ou de plusieurs agents capables de piéger le sulfure d'hydrogène, et
- optionnellement, de 0,05 à 1% en masse de dopes d'adhésivité,

par rapport à la masse totale du mastic bitumineux.

Plus préférentiellement, le mastic bitumineux selon l'invention comprend, de préférence est essentiellement constitué :

- de 1% à 25% en masse d'une ou de plusieurs huiles hydrocarbonées,
- de 20% à 45% en masse de bitume,
- de 30% à 50% en masse de charges,
- optionnellement, de 1% à 12% en masse d'un ou de plusieurs polymères,
- optionnellement, de 0,01 à 30% en masse d'un ou de plusieurs composés réticulant,
- optionnellement, de 0,05% à 3% en masse d'un ou de plusieurs agents capables de piéger le sulfure d'hydrogène, et
- optionnellement, de 0,05 à 1% en masse de dopes d'adhésivité,

par rapport à la masse totale du mastic bitumineux.

Encore plus préférentiellement, le mastic bitumineux selon l'invention comprend, de préférence est essentiellement constitué :

- de 1% à 25% en masse d'une ou de plusieurs huiles hydrocarbonées,
- de 25% à 40% en masse de bitume,
- de 40% à 50% en masse de charges, et
- optionnellement de 2 à 9% en masse d'un ou de plusieurs polymères, plus préférentiellement de 3 à 7% en masse, encore plus préférentiellement de 4 à 6% en masse,
- optionnellement, de 0,01 à 30% en masse d'un ou de plusieurs composés réticulant,
- optionnellement, de 0,1 à 1% en masse d'un ou de plusieurs agents capables de piéger le sulfure d'hydrogène, et
- optionnellement, de 0,05 à 1% en masse de dopes d'adhésivité,

par rapport à la masse totale du mastic bitumineux.

Le mastic bitumineux selon l'invention présente, de préférence, une viscosité dynamique à 160°C, déterminée selon la norme NF EN 13702, allant de 200 à 1000 mPa.s, plus préférentiellement de 200 à 600 mPa.s, encore plus préférentiellement de 200 à 500 mPa.s, avantageusement de 250 à 350 mPa.s.

De préférence, le mastic bitumineux selon l'invention présente une viscosité dynamique, déterminée selon la norme NF EN 13702, de 150 à 400 mPa.s, plus préférentiellement de 200 à 350 mPa.s.

Le mastic bitumineux selon l'invention présente, de préférence, un point de fragilité FRAASS, déterminé selon la norme EN 12593, inférieur ou égal à -15°C, plus préférentiellement inférieur ou égal à -20°C, encore plus préférentiellement inférieur ou égal à -30°C.

Le mastic bitumineux selon l'invention présente, de préférence, une pénétrabilité à 25°C, déterminée selon la norme EN1426, supérieure ou égale à 150 1/10 mm, plus préférentiellement supérieure ou égale à 155 1/10 mm, encore plus préférentiellement supérieure ou égale 160 1/10 mm.

Le mastic bitumineux selon l'invention présente, de préférence, une température de ramollissement bille et anneau ou TBA, mesurée selon la norme EN 1427, supérieure ou égale à 60°C, plus préférentiellement supérieure ou égale à 65°C, encore plus préférentiellement supérieure ou égale à 70°C, avantageusement supérieure ou égale à 75°C, plus avantageusement supérieure ou égale à 80°C.

***Procédé de préparation du mastic bitumineux***

La présente invention concerne également un procédé de préparation d'un mastic bitumineux tel que défini ci-dessus. De préférence, le procédé de préparation selon l'invention comprend au moins les étapes suivantes :

(1) le chauffage du bitume, de préférence sous agitation, à une température allant de 100°C à 220°C, de préférence de 130°C à 190°C, encore plus avantageusement de 140°C à 180°C,
(2) l' introduction, de préférence sous agitation, de la ou de les huiles hydrocarbonées,
(3) optionnellement l'introduction du ou des polymères et encore plus optionnellement l'introduction du ou des composés réticulants et/ou du ou des agents capables de piéger le sulfure d'hydrogène et/ou des dopes d'adhésivité,
(4) l'introduction des charges, et
(5) le malaxage du mélange.

Les différents composants du mastic bitumineux selon l'invention, en particulier le bitume, l'huile, le polymère, les charges et, le cas échéant, l'ensemble des composés optionnels, sont mélangés selon les proportions définies précédemment.

L'introduction des différents composés optionnels au cours de l'étape (3) peut être réalisée de manière simultanée ou par ajouts successifs.

Selon un mode de réalisation particulier, les composés optionnels sont introduits à l'étape (2), en même temps que l'huile ou encore directement avec le bitume à l'étape (1).

De préférence, les étapes (1) à (4) sont réalisées sous agitation.

Préférentiellement, juste après l'étape (4) d'introduction des charges, l'agitation est maintenue pendant au plus 5 minutes, de préférence au plus 1 minute, pour permettre l'obtention d'un mélange homogène.

Le mélange obtenu à la fin de l'étape (4) est ensuite malaxé en continu afin de former un mélange homogène dont l'homogénéité est, de préférence, maintenue jusqu'à son application. Ce malaxage est, de préférence, réalisé à une température allant de 120°C à 200°C, plus préférentiellement allant de 130°C à 190°C, encore plus préférentiellement de 140°C à 180°C. La durée du malaxage est de quelques secondes à quelques minutes, de préférence de 0,5 à 4 heures, avantageusement de 1,5 à 2,5 heures.

Le procédé tel que défini ci-dessus peut également comprendre, entre les étapes (3) et (4) une étape supplémentaire (A) de gonflement de la composition.

De préférence, l'étape optionnelle de gonflement (A) est réalisée à une température allant de 140 à 220°C, plus préférentiellement de 160 à 190,

De préférence, la durée de l'étape de gonflement (A) va de 10 min à 24h, de préférence de 1h à 10h, plus préférentiellement de 2h à 6h

Le procédé tel que défini ci-dessus peut en outre comprendre, entre les étapes (3) et (4) une étape supplémentaire (B) de maturation.

De préférence, l'étape supplémentaire (B) est réalisée à une température allant de 100°C à 220°C, plus préférentiellement de 130°C à 190°C, encore plus préférentiellement de 140°C à 180°C.

De préférence, la durée de l'étape de maturation (B) va de 1h à 48h, de préférence 5h à 24h, plus préférentiellement de 10h à 20h, encore plus préférentiellement de 15h à 20h.

Le procédé selon l'invention peut en particulier comprendre entre les étapes (3) et (4) à la fois une étape optionnelle (A) et une étape optionnelle (B).

Dans ce cas, les étapes (A) et (B) peuvent être réalisées dans n'importe quel ordre. De préférence, l'étape (A) est réalisée en premier et l'étape (B) est réalisée à la suite de l'étape (A).

*Applications du mastic bitumineux*

L'invention concerne également l'utilisation d'un mastic bitumineux tel que défini ci-dessus pour colmater et/ou réparer des fissures présentes à la surface de matériaux de construction.

Selon une première variante, le mastic bitumineux selon l'invention est utilisé pour colmater et/ou réparer des discontinuités, notamment des fissures, présentes à la surface d'une structure, d'un bâtiment ou d'une chaussée.

Selon une seconde variante, le mastic bitumineux selon l'invention est utilisé pour faire la jonction entre deux éléments de structure d'une construction.

L'invention concerne également l'utilisation d'un mastic bitumineux selon l'invention pour limiter et/ou prévenir et/ou retarder la propagation, notamment l'allongement et/ou l'élargissement, de discontinuités, notamment de fissures, présentes à la surface d'une structure, d'un bâtiment ou d'une chaussée.

L'invention concerne également l'utilisation d'un mastic bitumineux selon l'invention pour limiter et/ou prévenir et/ou retarder la pénétration et/ou l'infiltration d'eau à l'intérieur d'une structure, d'un bâtiment ou d'une chaussée.

L'invention concerne également un procédé pour colmater et/ou boucher et/ou réparer une fissure présente à la surface d'une structure, d'un bâtiment ou d'une chaussée comprenant l'application d'un mastic bitumineux selon l'invention au niveau de la fissure.

Ce procédé comprend, de préférence, les étapes suivantes :

(1') la fourniture d'un mastic bitumineux tel que défini ci-dessus, ledit mastic bitumineux étant conditionné à une température allant de 100°C à 200°C, de préférence allant de 120°C à 180°C, plus préférentiellement allant de 130°C à 160°C,
(2') l'introduction dudit mastic bitumineux chauffé à l'intérieur de la fissure, et
(3') le refroidissement du mastic bitumineux.

L'introduction du mastic bitumineux à l'intérieur de la fissure peut être réalisée selon toute méthode classique de traitement des fissures. L'homme du métier connait ces différentes méthodes et sait comment les adapter à la fissure à traiter afin de garantir un maximum d'efficacité.

L'invention concerne enfin un procédé pour maintenir et/ou renforcer l'étanchéité d'une structure, ce procédé comprenant l'application d'un mastic bitumineux selon l'invention sur tout ou partie de la surface de la structure.

Ce procédé comprend, de préférence, les étapes suivantes :

a) la fourniture d'un mastic bitumineux tel que défini ci-dessus, ledit mastic bitumineux étant conditionné à une température allant de 100°C à 200°C, de préférence allant de 120°C à 180°C, plus préférentiellement allant de 130°C à 160°C,
b) l'étalement dudit mastic bitumineux sur tout ou partie de la surface de la structure, et
c) le refroidissement du mastic bitumineux.

L'étalement du mastic bitumineux sur tout ou partie de la surface de la structure à traiter peut être réalisé selon toute méthode classique d'application d'un revêtement d'étanchéité. L'homme du métier connait ces différentes méthodes et sait comment les adapter à la structure à traiter afin de garantir une étanchéité optimale.

Les différents modes de réalisation, variantes, les préférences et les avantages décrits ci-dessus pour chacun des objets de l'invention s'appliquent à tous les objets de l'invention et peuvent être pris séparément ou en combinaison.

L'invention est illustrée par les exemples suivants donnés à titre non limitatif.

## Exemples

Dans ces Exemples, les parties et pourcentages sont exprimés en poids sauf indication contraire.

Matériel et méthodes

Les caractéristiques rhéologiques et mécaniques du bitume et des compositions bitumineuses auxquelles on fait référence dans ces exemples sont mesurées suivant les méthodes indiquées dans le tableau 1.

**Tableau 1**

| Propriété | Abbréviation | Unité | Norme de mesure |
|---|---|---|---|
| Pénétrabilité à l'aiguille à 25°C | $P_{25}$ | 1/10mm | EN 1426 |

(suite)

| Propriété | Abbréviation | Unité | Norme de mesure |
|---|---|---|---|
| Température de ramollissement bille et anneau | TBA | °C | EN 1427 |
| Viscosité dynamique à 160°C | $V_{dyn}$ | mPa.s | En 13702 |
| Résistance à la fissuration : Point de fragilité Fraass | Fraass | °C | EN 12593 |

**Base bitume** : On choisit une base bitume de grade 160/220, ayant une pénétrabilité P25 de 180 1/10 mm et une TBA de 40,4°C et disponible commercialement auprès de Total Marketing Services.

**L'élastomère** : L'élastomère, est un copolymère à blocs styrène/butadiène/styrène (SBS), à 30,5% en poids de styrène et à 69,5% en poids de butadiène. La teneur en groupement 1,2-vinyle est de 27,8% en poids par rapport au poids total du copolymère. Le copolymère a une masse moléculaire moyenne en poids (Mw) de 142 500 daltons et un indice de polydispersité $I_p$ de 1,09. Ce copolymère est disponible commercialement auprès de la société KRATON sous la référence commerciale D1192.

**L'agent de vulcanisation :** L'agent de vulcanisation est un agent à base de soufre disponible commercialement auprès de la société TOTAL MARKETING France sous la référence PAXL.

**L'agent capable de piéger le sulfure d'hydrogène** : L'agent capable de piéger le sulfure d'hydrogène, noté **Scavenger $H_2S$,** est l'octoate de zinc disponible commercialement auprès de la société Baerlocher sous la référence commerciale Baerostab L 233.

**Les huiles hydrocarbonées** :

L'huile **H1**, est une huile hydrocarbonée présentant :

- 31% en masse de composés paraffiniques,
- 49% en masse de composés naphténiques, et
- 20% en masse de composés aromatiques.

Cette huile est disponible auprès de la société TOTAL MARKETING France.

L'huile **H2,** est une huile hydrocarbonée présentant :

- 67% en masse de composés paraffiniques,
- 19% en masse de composés naphténiques, et
- 14% en masse de composés aromatiques.

**Les charges** : Les charges sont constituées de poudre de craie présentant une granulométrie : 100 microns.

**Méthode de préparation des compositions de mastics** :

La base bitume est mélangée avec l'huile dans un réacteur mélangeur Silverson® à 140°C sous agitation à 6000 tours/min. L'élastomère, l'agent de vulcanisation sont ajoutés simultanément au mélange pendant 30 min.

Ensuite le réacteur est placé dans un chauffe-ballon à 180°C sous agitation à 400 tours/min pendant 5h30. La température est baissée à 160°C et l'agitation est baissée à 200 tours/min pendant 18h. L'agent capable de piéger le sulfure d'hydrogène est ensuite ajouté, de manière successive, à la base bitume chauffée tout en conservant l'agitation à 200 tours/min. Les charges sont ensuite introduites et le mélange est agité pendant 45 minutes à une température de 180°C.

Résultats

**1. Préparation des différentes compositions de mastic**

Les compositions de mastic **C1** et **C2** correspondant aux mélanges détaillés dans le tableau 2 suivant sont préparées selon le protocole décrit ci-dessus.

La composition **C1** est comparative.

La composition C**2** est selon l'invention.

**Tableau 2**

| Composition | C1 (comparatif) | C2 (selon l'invention) |
|---|---|---|
| **Base bitume** | 35,7% | 35,7% |
| **Elastomère** | 4,0% | 4,0% |
| **Agent de vulcanisation** | 0,1% | 0,1% |
| **Scavenger H$_2$S** | 0,2% | 0,2% |
| **Huile H1** | 20,0% | - |
| **Huile H2** | - | 20,0% |
| **Charges** | 40% | 40% |

**2. Propriétés rhéologiques et mécaniques des compositions C1 et C2**

La pénétrabilité à 25°C, la température de ramollissement bille et anneau, la viscosité dynamique et le point de fragilité Fraass des compositions de mastic **C1** et **C2** préparées ci-dessus sont mesurés selon les protocoles définis ci-dessus. Les résultats de ces mesures sont donnés dans le tableau 3 ci-dessous.

**Tableau 3**

| Composition | C1 (comparatif) | C2 (selon l'invention) |
|---|---|---|
| **P25** (1/10 mm) | 150 | 160 |
| **TBA** (°C) | 73,8 | 83,0 |
| **V$_{dyn}$** (mPa.s) | 408,8 | 323,1 |
| **Fraass** (°C) | -29 | -33 |

La composition **C2** selon l'invention présente, par rapport à la composition **C1** selon l'art antérieur :

- une pénétrabilité plus élevée,
- une température de ramollissement plus élevée,
- une viscosité réduite, et
- un point de fragilité Fraass semblable.

La composition selon l'invention présente donc des propriétés mécaniques améliorées par rapport aux compositions de l'art antérieur tout en conservant de bonnes propriétés de résistance à la fissuration.

**Revendications**

1. Mastic bitumineux comprenant :

   - de 0,5% à 25% en masse d'au moins une huile hydrocarbonée dont la teneur totale en composés paraffiniques, mesurée selon la méthode ASTM D2140, est supérieure ou égale à 50% en masse, de préférence supérieure ou égale à 60% en masse, par rapport à la masse totale de l'huile,
   - de 15% à 60% en masse de bitume,
   - de 20% à 60% en masse de charges, et
   - au plus 14% en masse d'au moins un polymère, de préférence choisi parmi les élastomères,

   par rapport à la masse totale de mastic bitumineux.

2. Mastic bitumineux selon la revendication 1, dans lequel l'huile hydrocarbonée est choisie parmi les huiles synthétiques issues des coupes d'unité de désasphaltage (DAO) et leurs mélanges.

**3.** Mastic bitumineux selon l'une quelconque des revendications 1 et 2, dans lequel l'huile hydrocarbonée a une teneur en composés naphténiques, mesurée selon la norme ASTM D2140, inférieure ou égale à 25% en masse, de préférence allant de 5% à 25% en masse, plus préférentiellement allant de 10 à 25% en masse, par rapport à la masse totale d'huile hydrocarbonée.

**4.** Mastic bitumineux selon l'une quelconque des revendications précédentes, dans lequel l'huile hydrocarbonée a une teneur en composés paraffiniques, mesurée selon la norme ASTM D2140, supérieure ou égale à 50% en masse, de préférence supérieure ou égale 60% en masse, par rapport à la masse d'huile hydrocarbonée.

**5.** Mastic bitumineux selon l'une quelconque des revendications précédentes, dans lequel l'huile hydrocarbonée présente un point d'aniline, déterminé selon la norme ISO 2977 :1997, supérieur ou égal à 80°C, de préférence supérieur ou égal à 90°C, plus préférentiellement supérieur ou égal à 100°C.

**6.** Mastic bitumineux selon l'une quelconque des revendications précédentes, dans lequel le polymère est choisi parmi les copolymères à bloc, de préférence à base de motifs diène conjugué et de motifs hydrocarbure monovinyl aromatique, avantageusement à base de motifs butadiène et de motifs styrène.

**7.** Mastic bitumineux selon l'une quelconque des revendications précédentes, dans lequel le polymère est choisi parmi les copolymères à blocs de styrène et de butadiène présentant une teneur pondérale en groupements 1,2-vinyle allant de 10% à 70%, de préférence de 10% à 50%, plus préférentiellement de 10% à 40%, encore plus préférentiellement de 15% à 40%, et avantageusement de 20 à 40% en masse, par rapport à la masse totale du copolymère.

**8.** Mastic bitumineux selon la revendication 7, dans lequel le copolymère à blocs à base de styrène et de butadiène a une masse moléculaire moyenne en masse allant de 10 000 à 500 000 g.mol$^{-1}$, de préférence allant de 50 000 à 200 000 g.mol$^{-1}$, plus préférentiellement allant de 50 000 à 150 000 g.mol$^{-1}$.

**9.** Procédé de préparation d'un mastic bitumineux selon l'une quelconque des revendications 1 à 8 comprenant au moins les étapes suivantes :

(1) le chauffage du bitume à une température allant de 100°C à 220°C, de préférence de 130°C à 190°C, encore plus avantageusement de 140°C à 180°C,
(2) l'introduction, sous agitation, de l'huile hydrocarbonée,
(3) l'ajout éventuel du polymère,
(4) l'introduction des charges, et
(5) le malaxage du mélange.

**10.** Utilisation d'un mastic bitumineux selon l'une quelconque des revendications 1 à 8 pour colmater et/ou réparer des fissures présentes à la surface d'un matériau de construction, notamment les fissures présentes à la surface d'une structure, d'un bâtiment ou d'une chaussée, de préférence une chaussée.

**11.** Utilisation d'un mastic bitumineux selon l'une quelconque des revendications 1 à 8 comme joint entre deux éléments de structure d'une construction.

**12.** Utilisation d'un mastic bitumineux selon l'une quelconque des revendications 1 à 8 pour limiter et/ou prévenir et/ou pour retarder la propagation, notamment l'allongement et/ou l'élargissement, de discontinuités, notamment de fissures, présentes à la surface d'une structure, d'un bâtiment ou d'une chaussée.

**13.** Utilisation d'un mastic bitumineux selon l'une quelconque des revendications 1 à 8 pour limiter et/ou prévenir et/ou pour retarder la pénétration et/ou l'introduction d'eau à l'intérieur d'une structure, d'un bâtiment ou d'une chaussée.

**14.** Procédé pour colmater et/ou boucher et/ou réparer une fissure présente à la surface d'une structure, d'un bâtiment ou d'une chaussée, ce procédé comprenant :

(1) la fourniture d'un mastic bitumineux selon l'une quelconque des revendications 1 à 8, ledit mastic bitumineux étant conditionné à une température allant de 100°C à 200°C, de préférence allant de 120°C à 180°C, plus préférentiellement allant de 130°C à 160°C,
(2) l'introduction dudit mastic bitumineux chauffé à l'intérieur de la fissure, et
(3) le refroidissement du mastic bitumineux.

**15.** Procédé pour maintenir et/ou renforcer l'étanchéité d'une structure, ce procédé comprenant :

(1) la fourniture d'un mastic bitumineux selon l'une quelconque des revendications 1 à 8, ledit mastic bitumineux étant conditionné à une température allant de 100°C à 200°C, de préférence allant de 120°C à 180°C, plus préférentiellement allant de 130°C à 160°C,
(2) l'étalement dudit mastic bitumineux sur tout ou partie de la surface de la structure, et
(3) le refroidissement du mastic bitumineux.

**Patentansprüche**

**1.** Bitumenmastix, umfassend:

- von 0,5 Gewichts-% bis 25 Gewichts-% von mindestens einem kohlenwasserstoffhaltigen Öl, dessen Gesamtgehalt an paraffinischen Verbindungen, der gemäß dem Verfahren ASTM D2140 gemessen wird, bezogen auf die Gesamtmasse des Öls größer oder gleich 50 Gewichts-%, vorzugsweise größer oder gleich 60 Gewichts-% beträgt,
- 15 Gewichts-% bis 60 Gewichts-% Bitumen,
- 20 Gewichts-% bis 60 Gewichts-% Füllstoffe, und
- höchstens 14 Gewichts-% von mindestens einem Polymer, das vorzugsweise aus Elastomeren ausgewählt ist,

bezogen auf das Gesamtgewicht an Bitumenmastix.

**2.** Bitumenmastix nach Anspruch 1, wobei das kohlenwasserstoffhaltige Öl aus synthetischen Ölen, die aus Fraktionen einer Entasphaltierungseinheit (DAO) stammen, und ihren Mischungen ausgewählt ist.

**3.** Bitumenmastix nach einem der Ansprüche 1 und 2, wobei das kohlenwasserstoffhaltige Öl bezogen auf das Gesamtgewicht des kohlenwasserstoffhaltigen Öls einen Gehalt an naphthenischen Verbindungen, gemessen gemäß der Norm ASTM D2140, von weniger oder gleich 25 Gewichts-%, vorzugsweise von 5 Gewichts-% bis 25 Gewichts-%, bevorzugter von 10 bis 25 Gewichts-% aufweist.

**4.** Bitumenmastix nach einem der vorhergehenden Ansprüche, wobei das kohlenwasserstoffhaltige Öl bezogen auf die Gesamtmasse des kohlenwasserstoffhaltigen Öls einen Gehalt an paraffinischen Verbindungen, gemessen gemäß der Norm ASTM D2140, von größer oder gleich 50 Gewichts-%, vorzugsweise größer oder gleich 60 Gewichts% aufweist.

**5.** Bitumenmastix nach einem der vorhergehenden Ansprüche, wobei das kohlenwasserstoffhaltige Öl einen Anilinpunkt, ermittelt gemäß der Norm ISO 2977:1997 von größer oder gleich 80°C, vorzugsweise größer oder gleich 90°C, bevorzugter größer oder gleich 100°C aufweist.

**6.** Bitumenmastix nach einem der vorhergehenden Ansprüche, wobei das Polymer aus Blockcopolymeren ausgewählt ist, vorzugsweise auf Grundlage von konjugierten Dieneinheiten und aromatischen Vinylmonomer-Kohlenwasserstoffeinheiten, vorteilhafterweise auf Grundlage von Butadieneinheiten und Styroleinheiten.

**7.** Bitumenmastix nach einem der vorhergehenden Ansprüche, wobei das Polymer aus Styrol-Butadien-Blockcopolymeren ausgewählt ist, die bezogen auf die Gesamtmasse des Copolymers einen Gewichtsgehalt an 1,2-Vinylgruppen von 10 Gewichts-% bis 70 Gewichts-%, vorzugsweise von 10 Gewichts-% bis 50 Gewichts-%, bevorzugter von 10 Gewichts-% bis 40 Gewichts-%, noch bevorzugter von 15 Gewichts-% bis 40 Gewichts-% und vorteilhafterweise von 20 bis 40 Gewichts-% aufweisen.

**8.** Bitumenmastix nach Anspruch 7, wobei das Styrol-Butadien-Blockcopolymer eine gewichtsgemittelte Molmasse von 10 000 bis 500 000 g.mol$^{-1}$, vorzugsweise von 50 000 bis 200 000 gmol$^{-1}$, bevorzugter von 50 000 bis 150 000 g.mol$^{-1}$ aufweist.

**9.** Verfahren zur Herstellung eines Bitumenmastix nach einem der Ansprüche 1 bis 8, das mindestens folgende Schritte umfasst:

(1) Erwärmen des Bitumens auf eine Temperatur von 100°C bis 220°C, vorzugsweise von 130°C bis 190°C, noch vorteilhafter von 140°C bis 180°C,
(2) Einleiten des kohlenwasserstoffhaltigen Öls unter Rühren,
(3) gegebenenfalls Zugeben des Polymers,
(4) Einbringen der Füllstoffe und
(5) Durchmischen der Mischung.

10. Verwendung eines Bitumenmastix nach einem der Ansprüche 1 bis 8 zum Abdichten und/oder Reparieren von Rissen an der Oberfläche eines Baustoffs, insbesondere Rissen an der Oberfläche eines Bauwerks, eines Gebäudes oder einer Fahrbahn, vorzugsweise einer Fahrbahn.

11. Verwendung eines Bitumenmastix nach einem der Ansprüche 1 bis 8 als Dichtung zwischen zwei Bauteilen einer Konstruktion.

12. Verwendung eines Bitumenmastix nach einem der Ansprüche 1 bis 8 zum Beschränken und/oder Verhindern und/oder zum Verzögern des Fortschreitens, insbesondere der Verlängerns und/oder Verbreiterns von Unregelmäßigkeiten, insbesondere Rissen an der Oberfläche eines Bauwerks, eines Gebäudes oder einer Fahrbahn.

13. Verwendung eines Bitumenmastix nach einem der Ansprüche 1 bis 8 zum Beschränken und/oder Verhindern und/oder zum Verzögern des Eindringens und/oder Eintretens von Wasser ins Innere eines Bauwerks, eines Gebäudes oder einer Fahrbahn.

14. Verfahren zum Abdichten und/oder Verschließen und/oder Reparieren eines Risses an der Oberfläche eines Bauwerks, eines Gebäudes oder einer Fahrbahn, wobei dieses Verfahren umfasst:

(1) Bereitstellen eines Bitumenmastix nach einem der Ansprüche 1 bis 8, wobei der Bitumenmastix bei einer Temperatur von 100°C bis 200°C, vorzugsweise von 120°C bis 180°C, bevorzugter von 130°C bis 160°C behandelt wird,
(2) Einbringen des erwärmten Bitumenmastix ins Innere des Risses und
(3) Abkühlen des Bitumenmastix.

15. Verfahren zum Aufrechterhalten und/oder Verbessern der Dichtheit eines Bauwerks, wobei dieses Verfahren umfasst:

(1) Bereitstellen eines Bitumenmastix nach einem der Ansprüche 1 bis 8, wobei der Bitumenmastix bei einer Temperatur von 100°C bis 200°C, vorzugsweise von 120°C bis 180°C, bevorzugter von 130°C bis 160°C behandelt wird,
(2) Verteilen des Bitumenmastix auf der gesamten Oberfläche des Bauwerks oder einem Teil derselben und
(3) Abkühlen des Bitumenmastix.

## Claims

1. A bituminous mastic comprising:

- from 0.5% to 25% by mass of at least one hydrocarbon oil whose total content of paraffinic compounds, measured according to the ASTM D2140 method, is greater than or equal to 50% by mass, preferably greater than or equal to 60% by mass, based on the total mass of the oil,
- from 15% to 60% by mass of bitumen,
- from 20% to 60% by mass of fillers, and
- at most 14% by mass of at least one polymer, preferably selected from elastomers, based on the total mass of bituminous mastic.

2. The bituminous mastic as claimed in claim 1, wherein the hydrocarbon oil is selected from synthetic oils derived from deasphalting unit fractions (DAO) and mixtures thereof.

3. The bituminous mastic as claimed in any one of claims 1 and 2, wherein the hydrocarbon oil has a content of naphthenic compounds, measured according to the ASTM D2140 standard, of less than or equal to 25% by mass, preferably ranging from 5% to 25% by mass, more preferentially ranging from 10 to 25% by mass, based on the total mass of hydrocarbon oil.

4. The bituminous mastic as claimed in any one of the preceding claims, wherein the hydrocarbon oil has a content of paraffinic compounds, measured according to the ASTM D2140 standard, greater than or equal to 50% by mass, preferably greater than or equal to 60% by mass, based on the mass of hydrocarbon oil.

5. The bituminous mastic as claimed in any one of the preceding claims, wherein the hydrocarbon oil has an aniline point, determined according to the ISO 2977:1997 standard, greater than or equal to 80°C, preferably greater than or equal to 90°C, more preferentially greater than or equal to 100°C.

6. The bituminous mastic as claimed in any one of the preceding claims, wherein the polymer is selected from block copolymers, preferably based on conjugated diene units and monovinyl aromatic hydrocarbon units, advantageously based on butadiene units and styrene units.

7. The bituminous mastic as claimed in any one of the preceding claims, wherein the polymer is selected from styrene-butadiene block copolymers having a weight content of 1,2-vinyl groups ranging from 10% to 70%, preferably from 10% to 50%, more preferentially from 10% to 40%, even more preferentially from 15% to 40%, and advantageously from 20 to 40% by mass, based on the total mass of the copolymer.

8. The bituminous mastic as claimed in claim 7, wherein the block copolymer based on styrene and butadiene has a mass-average molecular mass ranging from 10 000 to 500 000 $g.mol^{-1}$, preferably ranging from 50 000 to 200 000 $g.mol^{-1}$, more preferentially ranging from 50 000 to 150 000 $g.mol^{-1}$.

9. A method for preparing a bituminous mastic as claimed in any one of claims 1 to 8, comprising at least the following steps:

   (1) heating the bitumen to a temperature ranging from 100°C to 220°C, preferably from 130°C to 190°C, even more advantageously from 140°C to 180°C,
   (2) introducing the hydrocarbon oil with stirring,
   (3) optionally adding the polymer,
   (4) introducing the fillers, and
   (5) mixing the mixture.

10. The use of a bituminous mastic as claimed in any one of claims 1 to 8 for sealing and/or repairing cracks present on the surface of a building material, especially cracks present on the surface of a structure, a building or a roadway, preferably a roadway.

11. The use of a bituminous mastic as claimed in any one of claims 1 to 8 as a joint between two structural elements of a construction.

12. The use of a bituminous mastic as claimed in any one of claims 1 to 8 to limit and/or prevent and/or delay the propagation, notably the elongation and/or widening, of discontinuities, notably cracks, present on the surface of a structure, a building or a roadway.

13. The use of a bituminous mastic as claimed in any one of claims 1 to 8 to limit and/or prevent and/or delay the penetration and/or introduction of water into the interior of a structure, a building or a roadway.

14. A method for sealing and/or plugging and/or repairing a crack present on the surface of a structure, a building or a roadway, this method comprising:

   (1) providing a bituminous mastic as claimed in any one of claims 1 to 8, said bituminous mastic being conditioned at a temperature ranging from 100°C to 200°C, preferably ranging from 120°C to 180°C, more preferentially ranging from 130°C to 160°C,
   (2) introducing said heated bituminous mastic into the crack, and
   (3) cooling the bituminous mastic.

15. A method for maintaining and/or enhancing the waterproofing of a structure, this method comprising:

(1) providing a bituminous mastic as claimed in any one of claims 1 to 8, said bituminous mastic being conditioned at a temperature ranging from 100°C to 200°C, preferably ranging from 120°C to 180°C, more preferentially ranging from 130°C to 160°C,

(2) spreading said bituminous mastic over all or part of the surface of the structure, and

(3) cooling the bituminous mastic.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9414896 A1
- EP 0782977 A1
- FR 2897359 A1
- FR 2968655 A1
- FR 3034773 A1
- WO 2005065177 A
- WO 2015071154 A

**Littérature non-brevet citée dans la description**

- **LEE et al.** *Fuel Processing Technology,* 2014, vol. 119, 204-210